# EUROPEAN PATENT APPLICATION

(11) **EP 2 980 955 A1**
(43) Date of publication of application: **03.02.2016**
(21) Application number: 14774000.5
(22) Date of filing: 14.03.2014
(51) Int. Cl.: H02J 7/00, B60L 11/18, H01M 10/46, H01R 13/62

(54) **VEHICLE POWER UNIT**

(30) Priority: 27.03.2013 JP 2013067100
(71) Applicant: Panasonic Intellectual Property Management Co., Ltd., Osaka-shi, Osaka 540-6207 (JP)
(72) Inventor: ADACHI, Masakazu, Osaka 540-6207 (JP); KOSHIN, Hiroaki, Osaka 540-6207 (JP)
(74) Representative: Appelt, Christian W.
(86) International application number: PCT/JP2014/001454
(87) International publication number: WO 2014/156030

(57) **Abstract**

Vehicle power device (100) supplies storage battery (21) with charging power from power conversion circuit (1a) to charge it with connector (3) attached to inlet (22) of electric vehicle (101). Stress detector (4) detects force exerted on junction (5) by tensile strength of electric cable (2). Controller (1b) is configured: to start an output operation of charging power through power conversion circuit (1a) if the detected force is below a first threshold (K1); to raise an alarm through display (1d) and sound output device (1e) if the detected force is the first threshold (K1) or more when power conversion circuit (1a) outputs the charging power; and to stop power conversion circuit (1a) outputting the charging power if the detected force is a second threshold (K2) or more when power conversion circuit (1a) outputs the charging power, where K2>K1.

## Description

### Technical Field

The invention relates generally to vehicle power devices and, more particularly, to a vehicle power device configured to control charging of a storage battery of an electric vehicle.

### Background Art

Environmentally friendly electric vehicles with less toxic exhaust have been recently introduced in markets, thereby diffusing vehicle power devices that allow a storage battery of an electric vehicle to charge and discharge. Examples of an electric vehicle include an Electric Vehicle (EV), a Plug-in Hybrid Electric Vehicle (PHEV) and the like.

A vehicle power device configured to charge an electric vehicle has a power converter configured to output charging power for charging a storage battery thereof. An output of the power converter is connected with a first end of a charging cable. A second end of the charging cable is connected with a connector that is detachably attached to an inlet with which an electric vehicle is equipped. The power converter is to supply the charging power to the storage battery of the electric vehicle via the charging cable and the connector.

There is however a concern about damage to the charging cable or the connector caused by excessive stress exerted on the charging cable or the connector when the charging cable is pulled with the connector attached to the inlet.

There has been therefore proposed a configuration in which a strain gauge or a pressure sensor is installed in the connector or the charging cable and configured to detect excessive force exerted in a direction such that the connector is detached from the inlet. When detecting the excessive force in the direction such that the connector is detached from the inlet, the conventional configuration releases a latch between the connector and the inlet to allow the connector to release from the inlet (e.g., PTL 1).

### Citation List

### Patent Literature

PTL 1: JP Pub. No. 2011-187175

### Summary of Invention

### Technical Problem

In PTL 1, when a stress is exerted on the charging cable and the connector, a connection between the connector and the inlet is immediately released. In this case, a user needs to attach the connector to the inlet again. Thus, the user needs to attach the connector, which was attached to the inlet, thereto again, and it is accordingly inconvenient for the user to handle it.

The present invention has been achieved in view of the above circumstances, and an object thereof is to provide a vehicle power device that is easy to handle and prevents excessive stress from being exerted on an electric cable and a connector.

### Solution to Problem

A vehicle power device of the invention includes a power converter, an electric cable, a connector, a detector and a notification portion. The power converter is configured to output charging power for charging a storage battery with which an electric vehicle is equipped. A first end of the electric cable is connected to an output of the power converter. The connector is provided at a second end of the electric cable and configured to be detachably attached to an inlet of the electric vehicle. The detector is provided at a junction where the electric cable and the connector are joined together, and configured to detect force exerted on the junction by tensile strength of the electric cable. The notification portion is configured to give an alarm to a user. The power converter includes a power conversion circuit configured to generate and output the charging power, and a controller configured to control an operation of the power conversion circuit. The controller is configured: to start an output operation of the charging power through the power conversion circuit if the detected force is below a first threshold; to raise the alarm through the notification portion if the detected force is the first threshold or more when the power conversion circuit outputs the charging power; and to stop the power conversion circuit outputting the charging power if the detected force is a second threshold or more when the power conversion circuit outputs the charging power. The second threshold is above the first threshold.

According to an aspect of the invention, the vehicle power device includes a lock for preventing the connector from being released from the inlet. The controller is configured: to keep enabling the lock if the detected force is below a third threshold; and to disable the lock if the detected force is the third threshold or more. The third threshold is above the second threshold.

According to an aspect of the invention, the vehicle power device preferably includes a discharge circuit configured to discharge a voltage across pins of the connector before the lock is disabled if the detected force is the third threshold or more.

According to an aspect of the invention, the vehicle power device preferably includes a switch configured to shut off the charging power if the lock is disabled.

According to an aspect of the invention, the vehicle power device preferably includes an energizing member configured to exert force on the connector in a direction to release the connector from the inlet if the lock is disabled.

In the invention, preferably the detector is configured to detect bending stress exerted on the junction.

In the invention, preferably the power conversion circuit is configured to receive discharging power of the storage battery via the connector and the electric cable to perform power conversion of the discharging power to output the converted power. Preferably, the controller is configured: to start the power conversion of the discharging power through the power conversion circuit if the detected force is below the first threshold; to raise the alarm through the notification portion if the detected force is the first threshold or more when the power conversion circuit performs the power conversion of the discharging power; and to stop the power conversion circuit performing the power conversion of the discharging power if the detected force is a second threshold or more when the power conversion circuit performs the power conversion of the discharging power.

### Advantageous Effects of Invention

As stated above, in the invention, a user can prevent damage to the electric cable or the connector by changing tensile state of the electric cable in a continuous state of charging to reduce bending stress exerted on the junction. That is, it is possible to prevent excessive stress from affecting the electric cable and the connector, and provide users with the vehicle power device having ease of use in comparison with the conventional one.

### Brief Description of Drawings

FIG. 1 is a block diagram showing a configuration of a vehicle power device in accordance with Embodiment 1;
FIG. 2 is a schematic diagram showing a configuration around a junction between an electric cable and a connector in Embodiment 1;
FIG. 3 is a view illustrating an operation of a system in Embodiment 1;
FIG. 4 is a flow chart depicting the operation of the system in Embodiment 1;
FIG. 5 is a view illustrating another operation of the system in Embodiment 1;
FIG. 6 is a flow chart depicting the operation of the system in Embodiment 1;
FIG. 7 is a block diagram showing a configuration of a vehicle power device in Modified Example 1;
FIG. 8 is a schematic diagram showing a configuration around a junction between an electric cable and a connector in Modified Example 2;
FIG. 9 is a block diagram showing a configuration of a vehicle power device in Modified Example 3;
FIG. 10 is a block diagram showing a configuration of a vehicle power device in Embodiment 2; and
FIG. 11 is a flow chart depicting an operation of a system in Embodiment 2.

### Description of Embodiments

Embodiments of the present invention will be hereinafter explained with reference to drawings.

### (Embodiment 1)

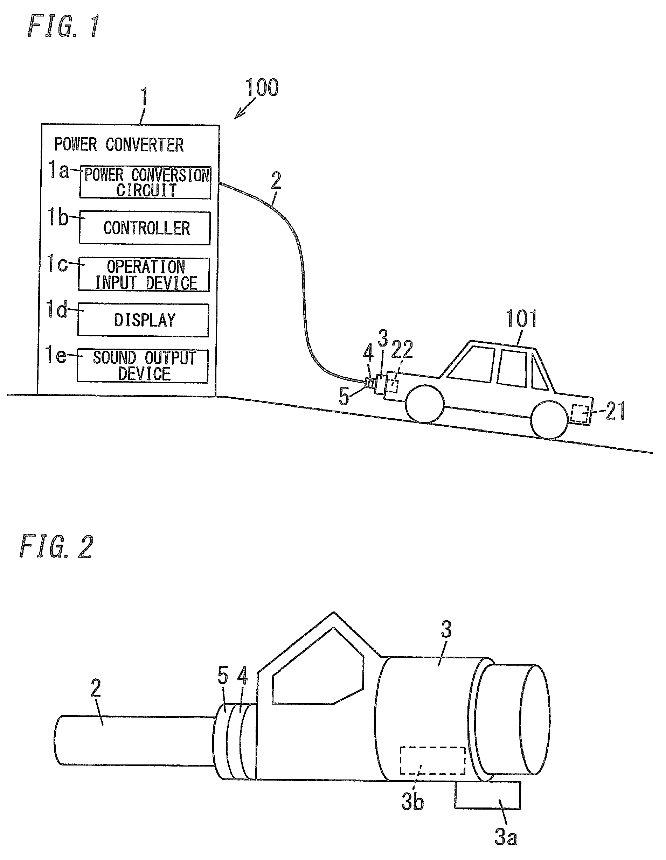

FIG. 1 shows a configuration of a vehicle power device (a battery charger) 100 according to the embodiment. The vehicle power device 100 is configured to supply charging power to a storage battery 21 with which an electric vehicle 101 such as an electric vehicle (EV) or a plug-in hybrid electric vehicle (PHEV) is equipped, thereby charging the storage battery 21.

The vehicle power device 100 includes a power converter 1, an electric cable 2 and a connector 3.

The power converter 1 is formed of a power conversion circuit 1a, a controller 1b, an operation input device 1c, a display 1d and a sound output device 1e. The power conversion circuit 1a is configured, in accordance with operation control of the controller 1b, to convert commercial power as a power supply to DC power to output the DC power as charging power. An output (terminal) of the power conversion circuit 1a is connected with a first end of the electric cable 2, and a side of a second end of the electric cable 2 is lead out of the power converter 1. The second end of the electric cable 2 is provided with the connector 3. The connector 3 is configured to be detachably attached to an inlet 22 provided in an exterior surface of a body of the electric vehicle 101. The inlet 22 is electrically connected to charging lines (not shown) provided in the electric vehicle 101 in order to charge the storage battery 21. That is, the power converter 1 can charge the storage battery 21 of the electric vehicle 101 by supplying the charging power produced by the power conversion circuit 1a thereto via the electric cable 2 and the connector 3. The electric cable 2 has a power supply line for supplying the charging power from the power conversion circuit 1a to the storage battery 21, and a signal line through which the controller 1b is configured to transmit a control signal for enabling and disabling a lock 3b to be described below.

FIG. 2 shows a schematic diagram around a junction 5 where the electric cable 2 and the connector 3 are joined together. In FIG. 2, the junction 5 is formed of a bushing.

The connector 3 includes a latch 3a that is formed of an engaging claw or the like configured to be mechanically fixed to the inlet 22. The connector 3 includes the lock 3b. The lock 3b is configured, during charging, to electrically lock the latch 3a so that the connector 3 is prevented from being released from the inlet 22 as a result of the latch 3a being disabled by tensile strength of the electric cable 2 or a human operation with respect to the latch 3a. The lock 3b includes a solenoid valve, and is configured to enable the lock and also to disable the lock (to release the lock) by driving the solenoid valve. The controller 1b is configured to control enabling and disabling of the lock 3b by driving the solenoid valve though the signal line in the electric cable 2.

A stress detector 4 is provided between the electric cable 2 and the connector 3 along with the junction 5, and configured to detect bending stress exerted on the junction 5 by tensile strength of the electric cable 2. The stress detector 4 is formed of piezoelectric devices provided in or around the junction 5. Each of the piezoelectric devices is configured to generate a voltage according to the bending stress exerted on the junction 5. The stress detector 4 is also configured to supply a signal (a stress detection signal) according to the bending stress to the controller 1b via the signal line in the electric cable 2. The controller 1b is configured to control the power conversion circuit 1a based on the stress detection signal from the stress detector 4.

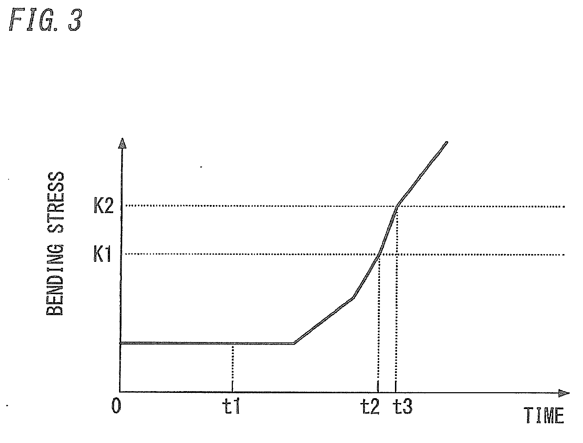

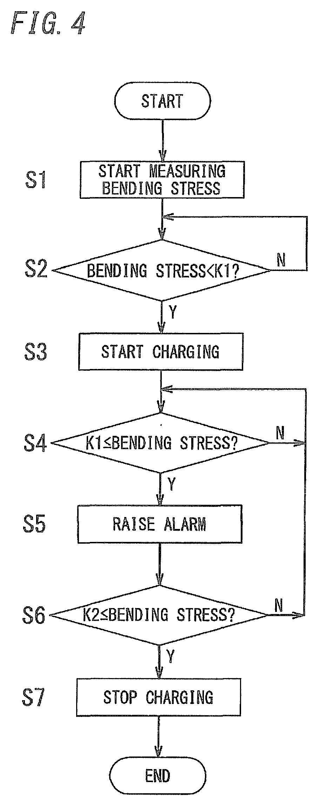

A user is to first perform a charging operation through the operation input device 1c after attaching the connector 3 to the inlet 22 of the electric vehicle 101 to enable the latch 3a. When receiving the charging operation, the controller 1b enables the lock 3b to perform a process shown in FIGS. 3 and 4.

After receiving the charging operation (after a time point t1 in FIG. 3), the controller 1b first starts a detection operation of bending stress through the stress detector 4 (S1), and then compares the bending stress exerted on the junction 5 with a threshold (a first threshold) K1 (S2). The controller 1b permits the power conversion circuit 1a to output charging power if the bending stress is below the threshold K1. The controller 1b also prohibits the power conversion circuit 1a from outputting the charging power if the bending stress is the threshold K1 or more.

When permitting the output operation of the charging power, the controller 1b communicates with the electric vehicle 101 in accordance with a predetermined communication sequence and then controls the power conversion circuit 1a to allow the power conversion circuit 1a to output the charging power, thereby charging the storage battery 21 (S3).

When prohibiting the output operation of the charging power, the controller 1b shows information about occurrence of a large bending stress through the display 1d formed of a liquid crystal display or the like, and makes an announcement of the occurrence of the large bending stress by voice through the sound output device 1e formed of speaker or the like. That is, the controller 1b prompts a user to change a tensile state of the electric cable 2 or a stopping place of the electric vehicle 101 to reduce the bending stress exerted on the junction 5, through the display 1d and the sound output device 1e. The user will reduce the bending stress exerted on the junction 5 and then perform the charging operation with the operation input device 1c again. The display 1d may be configured to perform the information-giving operation by any of message display by character representation, luminous display by lighting or blinking of a light source, or the like.

Even while the power conversion circuit 1a is outputting the charging power after starting the output operation of the charging power, the controller 1b monitors the bending stress exerted on the junction 5 based on the stress detection signal from the stress detector 4.

The controller 1b compares the bending stress exerted on the junction 5 with the threshold K1 (S4). It is assumed that the bending stress exerted on the junction 5 becomes the threshold K1 or more as a result of a change in the tensile state of the electric cable 2 or movement of the electric vehicle 101. In this case, the controller 1b gives an alarm to the user through the display 1d and the sound output device 1e while continuing the output operation of the charging power through the power conversion circuit 1a (S5). That is, the display 1d shows information about occurrence of the large bending stress, and the sound output device 1e makes an announcement of the occurrence of the large bending stress by voice. The display 1d and the sound output device 1e can correspond to the notification portion of the present invention. Any one of the display 1d and the sound output device 1e may correspond to the notification portion of the present invention.

The controller 1b then compares the bending stress exerted on the junction 5 with a threshold (a second threshold) K2 (S6), where threshold K2 > threshold K1. When the bending stress becomes the threshold K2 or more as a result of a further increase in the bending stress, the controller 1b stops output of the charging power from the power conversion circuit 1a (S7).

Even if the bending stress exerted on the junction 5 becomes large as stated above, the controller 1b only gives an alarm to the user in a bending stress range of K1 to K2 in which there is no concern that any of the electric cable 2 and the connector 3 will be damaged (t2-t3 in FIG. 3). Thus, the user can recognize that the bending stress exerted on the junction 5 is large, without immediate release of the connector 3 from the inlet 22 like a conventional one.

The user can therefore prevent damage to the electric cable 2 or the connector 3 by changing the tensile state of the electric cable 2 in a continuous state of charging to reduce bending stress exerted on the junction 5. That is, the vehicle power device 100 can prevent excessive stress from affecting the electric cable 2 and the connector 3, and provide users with the device having ease of use in comparison with the conventional one.

When the bending stress exerted on the junction 5 further increases, the controller 1b stops the output of the charging power from the power conversion circuit 1a in a bending stress range of K2 or more in which there is a concern that any of the electric cable 2 and the connector 3 will be damaged (on or after the time point t3 in FIG. 3). During output of the charging power, it is therefore possible to prevent damage to the electric cable 2 or the connector 3 and to prevent the connector 3 from coming off the inlet 22.

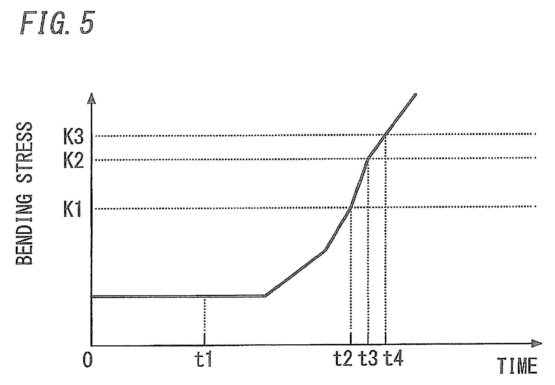

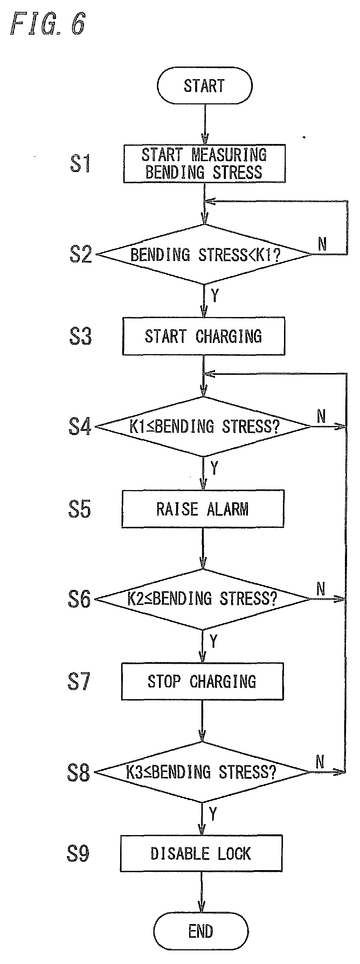

In addition, when receiving the charging operation, the controller 1b may further perform a control operation shown in FIGS. 5 and 6 based on a stress detection signal from the stress detector 4.

Specifically, it is assumed that after the power conversion circuit 1a stops outputting charging power at step S7, the bending stress exerted on the junction 5 further increases and is a threshold K3 or more (S8). In this case, the controller 1b changes the lock 3b from a locked state to an unlocked state (S9) (on or after a time point t4 in FIG. 5). The connector 3 is therefore released from the inlet 22 because the latch 3a is disabled by tensile strength of the electric cable 2 when the bending stress exerted on the junction 5 further increases. Thus, the vehicle power device 100 can prevent damage to the electric cable 2 or the connector 3, and collapse of the power converter 1.

The embodiment can include following modified examples.

### (Modified Example 1)

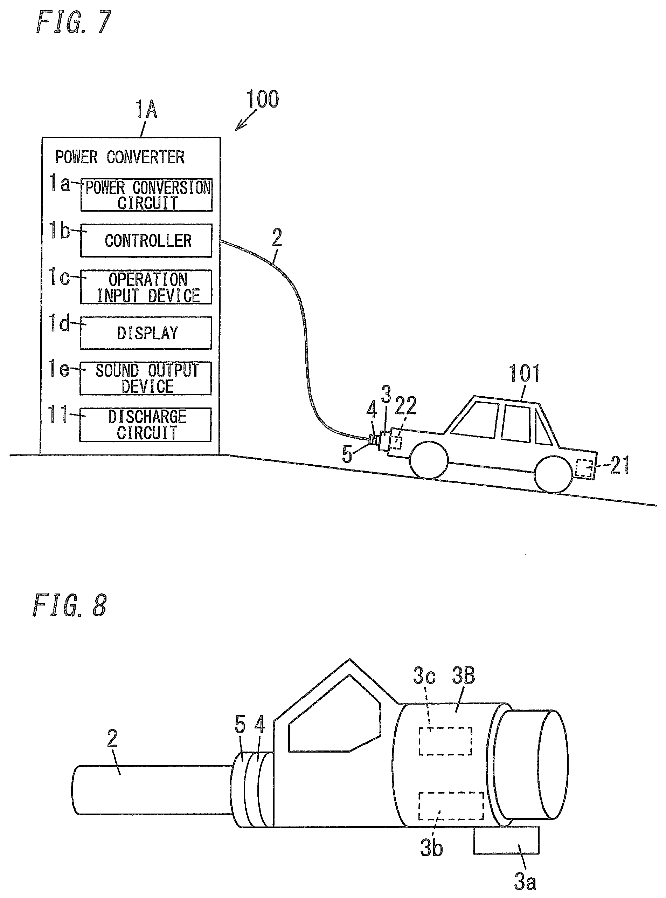

In order to allow a voltage across connection pins of a connector 3 to discharge before the lock 3b is disabled, a power converter 1A may be provided with a discharge circuit 11 as shown in FIG. 7. Alternatively, the connection pins of the connector 3 released from an inlet 22 may be hidden so as to prohibit a user from directly touching the connection pins. A vehicle power device 100 can accordingly prevent a user from receiving electric shock by touching the connection pins of the connector 3 by accident.

### (Modified Example 2)

As shown in FIG. 8, a switch 3c may be provided in a connector 3B, and configured to shut off charging power if a lock 3b is disabled. A controller 1b may be configured to control ON and OFF of the switch 3c, or configured to control ON and OFF of the switch 3c according to an operation of the lock 3b. A vehicle power device 100 can accordingly prevent a user from receiving electric shock by touching connection pins of the connector 3 by accident after the lock 3b is disabled. It is also possible to prevent a spark from occurring when the connector 3 is released.

### (Modified Example 3)

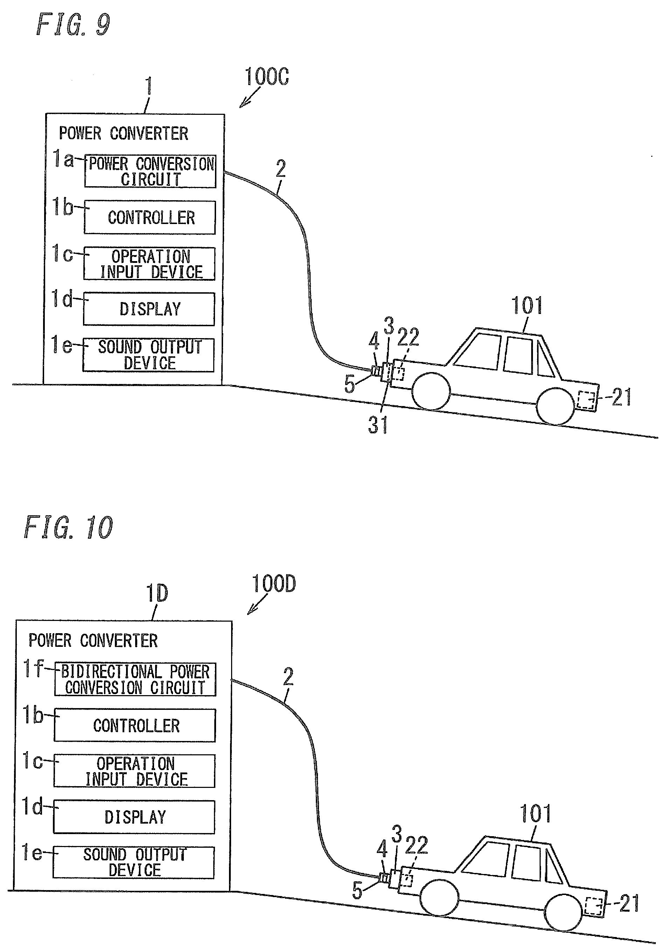

As shown in FIG. 9, a vehicle power device 100C may be provided with an energizing member 31 configured to exert force on a connector 3 so that the connector 3 is automatically released from an inlet 22 when a lock 3b is disabled. For example, the energizing member 31 may exert the force in a direction to release the connector 3 from the inlet 22 by spring force, electromagnetic repulsion force, air pressure, thermal expansion force or the like. In this case, the vehicle power device 100C can release the connector 3 from the inlet 22 through the energizing member 31. It is therefore possible to further prevent damage to an electric cable 2 or the connector 3, and collapse of a power converter 1.

### (Summary)

As stated above, a vehicle power device 100 according to Embodiment 1 includes a power converter 1, an electric cable 2, a connector 3, a detector (a stress detector 4), and a notification portion (a display 1d and a sound output device 1e). The power converter 1 is configured to output charging power for charging a storage battery with which an electric vehicle is equipped. A first end of the electric cable 2 is connected to an output terminal of the power converter 1. The connector 3 is provided at a second end of the electric cable 2 and configured to be detachably attached to an inlet of the electric vehicle. The stress detector 4 is provided at a junction 5 where the electric cable 2 and the connector 3 are joined together, and configured to detect force exerted on the junction 5 by tensile strength of the electric cable 3. The display 1d and the sound output device 1e are configured to give an alarm to a user. The power converter 1 includes a power conversion circuit 1a configured to generate and output the charging power, and a controller 1b configured to control an operation of the power conversion circuit 1a. The controller 1b is configured to start an output operation of the charging power through the power conversion circuit 1a if the force detected with the stress detector 4 is below a first threshold. The controller 1b is configured to raise the alarm through the display 1d and the sound output device 1e if the force detected with the stress detector 4 is the first threshold or more when the power conversion circuit 1a outputs the charging power. The controller is also configured to stop the power conversion circuit 1a outputting the charging power if the force detected with the stress detector 4 is a second threshold or more when the power conversion circuit 1a outputs the charging power. The second threshold has a value larger than the first threshold.

In the embodiment, the vehicle power device 100 may include a lock 3b for preventing the connector 3 from being released from the inlet. The controller 1b is configured: to keep enabling the lock 3b if the force detected with the stress detector 4 is below a third threshold; and to disable the lock 3b if the force detected with the stress detector 4 is the third threshold or more. The third threshold is a value larger than the second threshold.

In the embodiment, the vehicle power device 100 may include a discharge circuit 11 configured to discharge a voltage across pins of the connector 3 before the lock 3b is disabled if the force detected with the stress detector 4 is the third threshold or more.

In the embodiment, the vehicle power device 100 may include a switch 3c configured to shut off the charging power if the lock 3b is disabled.

In the embodiment, the vehicle power device 100 may include an energizing member 31 configured to exert force on the connector in a direction to release the connector from the inlet if the lock 3b is disabled. The vehicle power device 100 equipped with the energizing member 31 corresponds to the vehicle power device 100C described in Modified Example 3.

In the embodiment, the stress detector 4 may be configured to detect a bending stress exerted on the junction 5.

### (Embodiment 2)

FIG. 10 shows a configuration of a vehicle power device (a battery charger and discharger) 100D according to the present embodiment. Like kind elements are assigned the same reference numerals as depicted in Embodiment 1 and Modified Examples 1 to 3, and explanation thereof is omitted.

A power converter 1D includes a bidirectional power conversion circuit 1f in place of the power conversion circuit 1a. The bidirectional power conversion circuit 1f has a function configured to output charging power via an electric cable 2 and a connector 3 to charge a storage battery 21 like the power conversion circuit 1a. The bidirectional power conversion circuit 1f further has a function configured: to receive DC power (discharging power) supplied from the storage battery 21 of an electric vehicle 101 via the electric cable 2 and the connector 3; to convert the discharging power into a prescribed voltage (an AC voltage or a DC voltage); and to supply the converted voltage to a load(s) (not shown). That is, the bidirectional power conversion circuit 1f is configured to perform bidirectional power conversion (charge and discharge of the storage battery 21) for allowing the storage battery 21 to charge and discharge via the electric cable 2 and the connector 3. An operation of the bidirectional power conversion circuit 1f is controlled by a controller 1b.

A charging operation of the storage battery 21 is performed like Embodiment 1, and explanation thereof is accordingly omitted. A discharging operation of the storage battery 21 will be hereinafter explained.

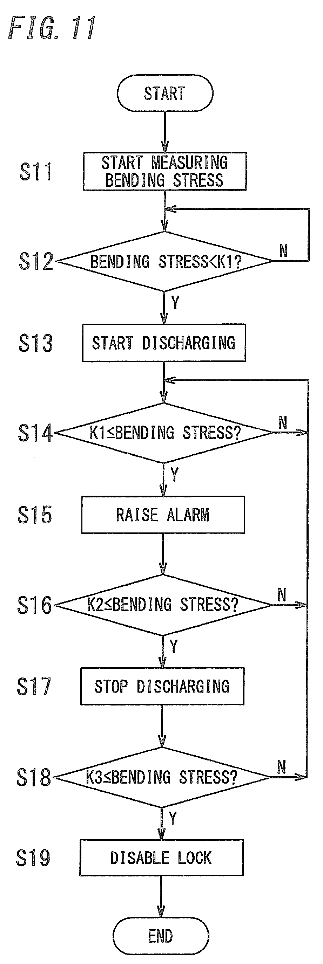

It is assumed that a user first attaches the connector 3 to an inlet 22 of the electric vehicle 101 to enable a latch 3a and then performs a charging operation with an operation input device 1c. In this case, when receiving the charging operation, the controller 1b enables the lock 3b to perform a process shown in FIG. 11.

After receiving the charging operation, the controller 1b first starts detecting bending stress with a stress detector 4 (S11), and then compares the bending stress exerted on a junction 5 with a threshold K1 (S12). The controller 1b permits the bidirectional power conversion circuit 1f to perform an operation for power conversion of the discharging power if the bending stress is below the threshold K1. The controller 1b prohibits the bidirectional power conversion circuit 1f from performing the operation for power conversion of the discharging power if the bending stress is the threshold K1 or more.

When permitting the operation for power conversion of the discharging power, the controller 1b communicates with the electric vehicle 101 in accordance with a predetermined communication sequence and then controls the bidirectional power conversion circuit 1f to perform power conversion of the discharging power (S13).

When prohibiting the operation for power conversion of the discharging power, the controller 1b shows information about occurrence of a large bending stress through a display 1d, and makes an announcement of the occurrence of the large bending stress by voice through a sound output device 1e. That is, the controller 1b prompts a user to change a tensile state of the electric cable 2 or a stopping place of the electric vehicle 101 to reduce the bending stress exerted on the junction 5, through the display 1d and the sound output device 1e. The user will reduce the bending stress exerted on the junction 5 and then perform the charging operation with the operation input device 1c again. The display 1d may be configured to perform the information-giving operation by any of message display by character representation, luminous display by lighting or blinking of a light source, or the like.

Even while the bidirectional power conversion circuit 1f is performing the power conversion of the discharging power after starting the operation for power conversion of the discharging power, the controller 1b monitors the bending stress exerted on the junction 5 based on a stress detection signal from the stress detector 4.

The controller 1b compares the bending stress exerted on the junction 5 with the threshold K1 (S14). It is assumed that the bending stress exerted on the junction 5 becomes the threshold K1 or more as a result of a change in the tensile state of the electric cable 2 or movement of the electric vehicle 101. In this case, the controller 1b gives an alarm to the user through the display 1d and the sound output device 1e while continuing the operation for power conversion through the bidirectional power conversion circuit 1f (S15). That is, the display 1d shows information about occurrence of the large bending stress, and the sound output device 1e makes an announcement of the occurrence of the large bending stress by voice.

The controller 1b then compares the bending stress exerted on the junction 5 with a threshold K2 (S16). When the bending stress becomes the threshold K2 or more as a result of a further increase in the bending stress, the controller 1b stops the bidirectional power conversion circuit 1f performing the operation for power conversion of the discharging power (S17).

Even if the bending stress exerted on the junction 5 becomes large as stated above, the controller 1b only gives an alarm to the user in a bending stress range of K1 to K2 in which there is no concern that any of the electric cable 2 and the connector 3 will be damaged. Thus, the user can recognize that the bending stress exerted on the junction 5 is large, without immediate release of the connector 3 from the inlet 22 like the conventional one.

The user can therefore prevent damage to the electric cable 2 or the connector 3 by changing the tensile state of the electric cable 2 in a continuous state of discharging to reduce bending stress exerted on the junction 5. That is, the vehicle power device 100D can prevent excessive stress from affecting the electric cable 2 and the connector 3, and provide users with the device having ease of use in comparison with the conventional one.

When the bending stress exerted on the junction 5 further increases, the controller 1b stops the bidirectional power conversion circuit 1f performing the operation for power conversion of the discharging power in a bending stress range of K2 or more in which there is a concern that any of the electric cable 2 and the connector 3 will be damaged. During the power conversion of the discharging power, it is therefore possible to prevent damage to the electric cable 2 or the connector 3 and to prevent the connector 3 from coming off the inlet 22.

It is assumed that after the controller 1b stops the bidirectional power conversion circuit 1f performing the operation for power conversion of the discharging power at step S17, the bending stress exerted on the junction 5 further increases and is a threshold K3 or more (S18). In this case, the controller 1b changes the lock 3b from a locked state to an unlocked state (S19). The connector 3 is therefore released from the inlet 22 because the latch 3a is disabled by tensile strength of the electric cable 2 when the bending stress exerted on the junction 5 further increases. Thus, the vehicle power device 100D can prevent damage to the electric cable 2 or the connector 3, and collapse of the power converter 1D.

Each of the embodiments detects bending stress exerted on the junction 5 by tensile strength of the electric cable 2, but may detect another parameter such as pressure exerted on the junction or distortion thereof.

### (Summary)

As stated above, a bidirectional power conversion circuit 1f (a power converter) according to the embodiment may be configured to receive discharging power of a storage battery via a connector 3 and an electric cable 2 to perform power conversion of the discharging power to output the converted power. A controller 1b is configured to start the power conversion of the discharging power through the bidirectional power conversion circuit 1f if force detected with a stress detector 4 (the detector) is below a first threshold. The controller 1b is configured to raise an alarm through a notification portion if the force detected with a stress detector 4 is the first threshold or more when the bidirectional power conversion circuit 1f performs the power conversion of the discharging power. The controller 1b is configured to stop the bidirectional power conversion circuit 1f performing the power conversion of the discharging power if the force detected with a stress detector 4 is a second threshold or more when the bidirectional power conversion circuit 1f performs the power conversion of the discharging power.

## Claims

1. A vehicle power device, comprising:
a power converter configured to output charging power for charging a storage battery with which an electric vehicle is equipped;
an electric cable, a first end of which is connected to an output of the power converter;
a connector which is provided at a second end of the electric cable and configured to be detachably attached to an inlet of the electric vehicle;
a detector which is provided at a junction where the electric cable and the connector are joined together, the detector being configured to detect force exerted on the junction by tensile strength of the electric cable; and
a notification portion configured to give an alarm to a user, wherein
the power converter comprises a power conversion circuit configured to generate and output the charging power, and a controller configured to control an operation of the power conversion circuit, and
the controller is configured
to start an output operation of the charging power through the power conversion circuit if the detected force is below a first threshold,
to raise the alarm through the notification portion if the detected force is the first threshold or more when the power conversion circuit outputs the charging power, and
to stop the power conversion circuit outputting the charging power if the detected force is a second threshold or more when the power conversion circuit outputs the charging power, the second threshold being above the first threshold.

2. The vehicle power device of claim 1, comprising a lock for preventing the connector from being released from the inlet, wherein
the controller is configured
to keep enabling the lock if the detected force is below a third threshold that is above the second threshold, and
to disable the lock if the detected force is the third threshold or more.

3. The vehicle power device of claim 2, comprising a discharge circuit configured to discharge a voltage across pins of the connector before the lock is disabled if the detected force is the third threshold or more.

4. The vehicle power device of claim 2, comprising a switch configured to shut off the charging power if the lock is disabled.

5. The vehicle power device of claim 2, comprising an energizing member configured to exert force on the connector in a direction to release the connector from the inlet if the lock is disabled.

6. The vehicle power device of any one of claims 1 to 5, wherein the detector is configured to detect bending stress exerted on the junction.

7. The vehicle power device of any one of claims 1 to 6, wherein
the power conversion circuit is configured to receive discharging power of the storage battery via the connector and the electric cable to perform power conversion of the discharging power to output the converted power, and
the controller is configured
to start the power conversion of the discharging power through the power conversion circuit if the detected force is below the first threshold,
to raise the alarm through the notification portion if the detected force is the first threshold or more when the power conversion circuit performs the power conversion of the discharging power, and
to stop the power conversion circuit performing the power conversion of the discharging power if the detected force is a second threshold or more when the power conversion circuit performs the power conversion of the discharging power.

## Amended claims

### Amended claims under Art. 19.1 PCT

**1.** (Amended) A vehicle power device, comprising:
a power converter configured to output charging power for charging a storage battery with which an electric vehicle is equipped;
an electric cable, a first end of which is connected to an output of the power converter;
a connector which is provided at a second end of the electric cable and configured to be detachably attached to an inlet of the electric vehicle;
a detector which is provided at a junction where the electric cable and the connector are joined together, the detector being configured to detect force exerted on the junction by tensile strength of the electric cable; and
a notification portion configured to give an alarm to a user, wherein
the power converter comprises a power conversion circuit configured to generate and output the charging power, and a controller configured to control an operation of the power conversion circuit, and
the controller is configured
to start an output operation of the charging power through the power conversion circuit if the detected force is below a first threshold,
to raise the alarm through the notification portion if the detected force is the first threshold or more when the power conversion circuit outputs the charging power,
to stop the power conversion circuit outputting the charging power if the detected force is a second threshold or more when the power conversion circuit outputs the charging power, the second threshold being above the first threshold,
the vehicle power device comprises a lock for preventing the connector from being released from the inlet, and
the controller is configured
to keep enabling the lock if the detected force is below a third threshold that is above the second threshold, and
to disable the lock if the detected force is the third threshold or more.

**2.** (Canceled)

**3.** (Amended) The vehicle power device of claim 1, comprising a discharge circuit configured to discharge a voltage across pins of the connector before the lock is disabled if the detected force is the third threshold or more.

**4.** (Amended) The vehicle power device of claim 1, comprising a switch configured to shut off the charging power if the lock is disabled.

**5.** (Amended) The vehicle power device of claim 1, comprising an energizing member configured to exert force on the connector in a direction to release the connector from the inlet if the lock is disabled.

**6.** (Amended) The vehicle power device of any one of claims 1 and 3 to 5, wherein the detector is configured to detect bending stress exerted on the junction.

**7.** (Amended) The vehicle power device of any one of claims 1 and 3 to 6,
wherein
the power conversion circuit is configured to receive discharging power of the storage battery via the connector and the electric cable to perform power conversion of the discharging power to output the converted power, and
the controller is configured
to start the power conversion of the discharging power through the power conversion circuit if the detected force is below the first threshold,
to raise the alarm through the notification portion if the detected force is the first threshold or more when the power conversion circuit performs the power conversion of the discharging power, and
to stop the power conversion circuit performing the power conversion of the discharging power if the detected force is a second threshold or more when the power conversion circuit performs the power conversion of the discharging power.
